# EUROPEAN PATENT SPECIFICATION

(11) **EP 2 386 207 B1**
(45) Date of publication and mention of the grant of the patent: **17.07.2013**
(21) Application number: 11164820.0
(22) Date of filing: 04.05.2011
(51) Int. Cl.: A23C 19/086

(54) **A process for the production of partially dried cheese powder**
Verfahren zur Herstellung von teilweise getrocknetem geriebenen Käse
Procédé pour la production de fromage en poudre partiellement seché

(30) Priority: 11.05.2010 IT MI20100834
(43) Date of publication of application: 16.11.2011
(73) Proprietor: AMBIENTE E NUTRIZIONE S.r.l., 20089 Rozzano (MI) (IT)
(72) Inventor: Cerea, Giuseppina, 20089 Rozzano (Milano) (IT)
(74) Representative: Ferreccio, Rinaldo

(56) References cited:
- EP-A1- 1 627 688
- EP-A1- 1 813 604
- FR-A1- 2 825 232
- US-A- 4 156 018

## Description

### Field of application

The present invention relates to the field of the dairy industry and in particular it refers to a process for the production of at least partially dried cheese, in particular powder/granular cheese, such as grated cheese, dried to a controlled residual moisture content, variable as necessary.

### Prior art

Cheese drying processes are known for the production of stabilized powder or grated cheese, which always provide for a preliminary refining of the original cheese mass for reducing the size and making the product compatible with the drying technologies. The subsequent drying process, usually by means of hot air in a fluidized bed, is required for adjusting the moisture content that usually is higher than the minimum content that ensures the correct stability and shelf life of the end product.

The technologies known for the production of powder or grated cheese exhibit several limits:
- few cheese types are suitable for treatment and thus, the technology is poorly flexible.
- the process is complicated.
- the various handling steps make the product susceptible to bacterial, mould and spore contaminations.
- the drying process with hot air does not allow a microbiological decontamination.
- the organoleptic and microbiological qualities of the end product are poorly controllable.

EP-A-1 627 688 discloses a process for grating cheese, comprising the steps of introducing compressed air into an enclosure including a truncated conical shaped sections, wherein the air travels along a downward path through the enclosure to a lower end of the conical section and flows back up and exits the enclosure via an exhaust outlet. Cheese material in pieces of 1 to 40 g with 14% to 65% moisture content is introduced into the enclosure and entrained in the air travelling downward through the enclosure, wherein at least a portion of the cheese material is ground before reaching the lower end of the enclosure. A grated product comprising ground cheese material is finally discharged from the lower end of the enclosure.

There is no mention in EP-A-1 627 688 of the possibility to use big pieces of cheese or pasty or melted cheese as the starting cheese material for the process therein disclosed.

The problem underlying the present invention therefore is to provide a continuous and automated process that allows obviating the limits of the technologies currently used and that if possible preserves the organoleptic characteristics of the starting cheese to the utmost level.

### Summary of the invention

The above problem has been solved, according to the present invention, by a process for the production of at least partially dried cheese powder according to claim 1.

By cheese powder it is meant cheese into a finely divided condition, in flakes or very thin strips, similar to that obtained with the conventional graters, and optionally containing at least one food additive.

In the present description, by the term "cheese", referred to the starting material of the process, it is meant a single type of cheese or a mixture of different cheese types. Without distinction, it may be milk, goat or sheep cheese, hard, semi-hard or soft, or melted cheese or mixtures thereof. The cheese subjected to the process according to the present invention generally and overall has a moisture content comprised between 22 and 60% by weight, preferably between 30 and 50% and conveniently around 40%. The cheese subjected to the process according to the invention is in coarse pieces, if it is of the hard or semi-hard type or in any case in solid state, or in the shape of a more or less viscous mass in the case of cheese such as crescenza cheese and melted cheese. Conveniently it is possible to mix different types of cheese with a different moisture contentand fat so as to feed the turbo-drier with a mixture of starting cheese with constant and controlled quality and preferably with a moisture content around 40%.

By way of an example only, the following types of cheese suitable for use in the process according to the invention may be mentioned: parmigiano reggiano, grana padano and other grana cheese types, sbrinz, emmenthal, sheep cheese at various maturing levels, fontina, gorgonzola, mozzarella, provolone, goat cheese, crescenza, asiago, latteria, cheddar, melted cheese, etc.

Conveniently, the process according to the invention is carried out with the aid of an apparatus called turbo-drier, comprising a cylindrical tubular body equipped with a heating jacket, closed at its opposite ends by end plates, with at least one inlet opening and at least one outlet opening and with a coaxial bladed rotor rotatably supported thereinside. The process according to the invention may use a first turbo-drier and optionally one further drier, which may be of the conventional type (fluid bed, cabinet drier, tunnel drier, etc.) or it may be a second turbo-drier, substantially identical to the first one.

All the percentages shown in the present specification are meant to be by weight based on the total cheese weight, unless otherwise indicated.

If the further drier is a second turbo-drier, the stream of cheese powder fed thereinside is subjected to the mechanical action of the bladed rotor rotated at a speed of at least 200 rpm, with a consequent centrifugation of the cheese powder particles against the heated wall, which brings about a further dehydration of the same and conveyance thereof towards the outlet opening of said second drier.

Said at least one food additive is preferably selected from the group comprising casein, lactic acid and other additives and processing aids commonly used in the dairy industry. The starting cheese, optionally with at least one food additive added thereto, is fed through the inlet opening of the turbo-drier preferably in a pasty or melted state, at a temperature of 30-100°C.

The rotation speed of the bladed rotor is preferably comprised between 200 and 1500 rpm. The flow rate of the stream of cheese entering into the first turbo-drier is generally comprised between 150 and 500 kg/h, when the turbo-drier has a diameter of 600 mm.

The wall temperature is preferably kept at about 110-160°C, advantageously around 120°C. The average residence time of the cheese in the turbo-drier is generally comprised between 30 seconds and 5 minutes.

It is moreover possible to feed into the turbo-drier, in co-current with said stream of cheese and through said at least one inlet opening, a continuous stream of a gas, for example air or nitrogen, heated at a temperature of about 80-180°C. This is to accelerate the dehydration of the cheese particles.

The stream of at least partially dried cheese powder exiting from the turbo-drier may be fed pneumatically to a cyclone, which separates the solid fraction and discharges it from the bottom through a star valve.

In some cases it may be convenient to use two or more turbo-driers in series for splitting the drying process into at least two consecutive stages; this especially applies to starting cheese with a high moisture content.

In these cases, the product exiting the first turbo-drier is directly fed to the head of the second turbo-drier from the discharge of the star valve, through a suitable screw transfer device. The product thus obtained achieves lower residual moisture contents.

Both in the case of a single turbo-drier and of two turbo-driers, the end product is cooled down by means of a cooling pneumatic conveyance apparatus, a cooled screw, a vibrator or other suitable system.

As an alternative to the use of two turbo-driers, it is possible to carry out the process according to the present invention using a first turbo-drier and a further drier other than turbo-driers, such as for example a tunnel, cabinet, turbine, belt or fluid bed drier. In this case, the treatment of the starting cheese with the first turbo-drier allows bringing the same to the powder or flake or granule condition and considerably decreasing the moisture content thereof. The subsequent step of treatment in a drier of the above type only has the function of completing the drying of the product exiting the first turbo-drier for bringing the moisture content to a value lower than or equal to 20%.

As is noted from the above description, the main advantage of the process according to the invention compared to those of the prior art consists in the possibility of obtaining a product provided with excellent organoleptic properties, thanks to the very short treatment time.

Moreover, the technology of centrifuging the product against a hot wall linked to the closed condition of the product treatment system allows obtaining products with a high microbiological purity.

The at least partially dried cheese powder obtained by the present process may be used for various uses in the food field, for example for preparing pizza toppings, for producing cheese snacks, fillings for ravioli pasta and the like, etc.

Moreover, the process requires a reduced energy consumption and allows a continuous processing, with consequent increase of the hourly productivity and time optimization.

Further advantages and features of the process according to the present invention shall appear more clearly from the description of an embodiment thereof, made hereinafter by way of a non-limiting example, with reference to the annexed drawing, which schematically shows an equipment for carrying out the present method.

### Detailed description

With reference to said drawing, the equipment used for producing partially dried cheese powder comprises a first turbo-drier T and optionally a second turbo-drier T'.

The first turbo-drier T (manufactured, for example, by the company VOMM Impianti e Processi in Rozzano (MI)) essentially comprises a cylindrical tubular body 1 closed at its opposite ends by end plates 2, 3 and equipped with a coaxial heating jacket 4 intended for being run by a fluid, for example diathermic oil, steam or hot or heated water.

The tubular body 1 has an inlet opening 5 for the cheese to be processed and an outlet opening 6 for the end product.

A bladed rotor 7 is rotatably supported within the tubular body 1. Blades 8 of this rotor are arranged helically and oriented so as to centrifuge and simultaneously convey the product subjected to treatment towards the outlet. A motor M rotates rotor 7 at a speed comprised between 200 and 1500 rpm, preferably 400-800 rpm.

For technical incidental reasons, the turbo-drier may of course have more than one inlet opening.

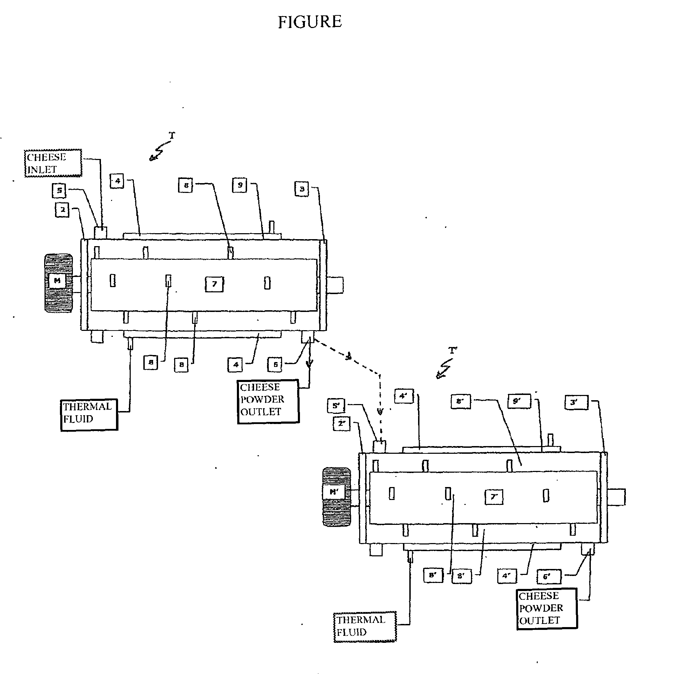

The second turbo-drier T' is substantially identical to the first turbo-drier T and consequently, it is not described any further except for noting that the parts thereof are indicated in the drawing with the same reference numerals used for the first turbo-drier but with an apostrophe.

A stream of cheese (a single type of cheese or a mixture of two or more cheese types) optionally with at least one food additive added thereto, in the pasty or melted state, and at a temperature of 30-100°C and with a moisture content comprised between 22% and 60%, is fed continuously into the first turbo-drier T through the inlet opening 5, at the same time and in co-current with a stream of air or other suitable gas, at 80-180°C. The cheese mass fed into the turbo-drier is subjected to the intense mechanical action of the rotor blades and consequently split into fine particles and centrifuged, since the entrance thereof into the turbo-drier, against the inner wall 9 heated at 90-160°C and at the same time it is conveyed towards the outlet opening 6 thanks to the helical orientation of said blades.

Thanks to the formation of a thin, turbulent, dynamic tubular layer of cheese particles, wherein the particles absorb a very large amount of energy, both in the form of mechanical energy provided by the action of the bladed rotor rotated at a high speed, and in the form of heat released by the inner heated wall of turbo-drier T, in few seconds or minutes the cheese undergoes a strong dehydration. The short duration of the heat treatment the particles are subjected to allows preserving the organoleptic properties of the cheese to the utmost level.

The intensity of the centrifugation treatment against the hot wall also carries out a sanitization of the particles, allowing to obtain products with a high microbiological purity.

A powder product is discharged continuously after a residence time in the turbo-drier comprised between 30 seconds and 5 minutes.

If this product already has a moisture content lower than or equal to 20%, it may be conveyed pneumatically to a cyclone (not shown), which separates the powder phase by means of a star valve located on the bottom thereof.

If the moisture content is higher than 20%, the product discharged from the star valve may be transferred through a screw injector (not shown) to a second turbo-drier T' for a further dehydration step, which brings the moisture content to a value lower than or equal to 20% and preferably comprised between 7 and 20%. At this point, the cheese powder exiting turbo-drier T' may be conveyed pneumatically to a cyclone (not shown), which separates the powder phase by means of a star valve located on the bottom thereof.

The dried product discharged from the star valve located on the bottom of the cyclone is the end product and can be cooled by a screw, pneumatic or vibrating cooler.

As mentioned hereinabove, instead of using a second turbo-drier T' it is possible to complete the drying of the product exiting turbo-drier T, if it has a moisture content higher than 20%, by feeding such product to a conventional drier, such as for example a tunnel, cabinet, turbine, belt or fluid bed drier.

### EXAMPLE 1

Using the apparatus schematically described above and following the method of the invention, a mixture of cheese, to which predetermined amounts of casein and lactic acid have been added inside a melter with plunging arm and having a moisture content of about 40% is fed continuously, through the inlet opening 5, into turbo-drier T with a diameter of 600 mm, at a temperature of 70°C and with a flow rate of about 400 Kg/h.

An air stream at a temperature of about 117°C is continuously fed into turbo-drier T through the inlet opening 5, in co-current with the stream of the above mixture.

The temperature of wall 9 is kept at about 120°C while the rotation speed of the bladed rotor 7 is kept constant at 650 rpm.

After an average residence time of 45 seconds in the turbo-drier T, a stream of end powder product with a moisture content of 19% is continuously discharged and is brought to cooling through a cold air pneumatic conveyance apparatus.

### EXAMPLE 2

Using the apparatus schematically described above and following the method of the invention, a mixture of cheese to which predetermined amounts of casein and lactic acid have been added inside a melter with plunging arm and having an overall moisture content of about 44% is fed continuously, through the inlet opening 5, into a first turbo-drier T with a diameter of 600 mm, at a temperature of 70°C and with a flow rate of about 450 Kg/ h.

A continuous air stream heated at 124°C is fed through said opening 5 in co-current with said stream of cheese mixture.

The temperature of wall 9 is kept at about 122 while the rotation speed of the bladed rotor 7 is kept constant at 650 rpm.

After an average residence time of about 50 seconds in the first turbo-drier T, a stream of powder product with a moisture content of 24% is continuously discharged.

This stream of powder product is fed to a second turbo-drier T' with a diameter of 600 mm, the inner wall 9' of which is kept at about 115°C by the heating jacket 4' and the bladed rotor 7' of which is kept in rotation at 650 rpm.

A continuous stream of air heated at about 117°C is fed continuously into turbo-drier T'.

After an average residence time of about 45 seconds in the second turbo-drier T", a stream of dried cheese powder with a moisture content of 14% is continuously discharged and is brought to cooling through a cold air pneumatic conveyance apparatus.

## Claims

1. A process for the production of at least partially dried cheese powder from cheese with a water content of 22% to 60% by weight and optionally with at least one food additive added thereto, comprising the steps of:
a) providing a first turbo-drier (T) comprising a cylindrical tubular body (1) closed at its opposite ends by end plates (2, 3), equipped with a heating jacket (4), with at least one inlet opening (5) and at least one outlet opening (6) and with a bladed rotor (7) rotatably supported thereinside, and optionally one further drier;
b) feeding, through said at least one inlet opening (5), a continuous stream of cheese, with a moisture content of between 22% and 60%, into said turbo-drier (T), whose inner wall (9) temperature is 90°C to 160°C,
c) subjecting said stream of cheese to the mechanical action of said bladed rotor (7) rotated at a speed of at least 200 rpm, with a consequent splitting of the cheese into fine particles and centrifugation of said particles against said heated wall (9), which brings about a dehydration of said particles and conveyance of the same towards said at least one outlet opening (6),
d) optionally feeding the stream of cheese powder exiting said first turbo-drier (T) into said further drier,
e) continuously discharging from said first turbo-drier (T) or optionally from said further drier a stream of cheese powder having a moisture content lower or equal to 20%, preferably comprised between 15% and 20%.

2. A process according to claim 1, wherein said at least one food additive is selected from the group comprising casein, lactic acid and other additives and processing aids commonly used in the dairy industry.

3. A process according to claim 1 or 2, wherein said step d) is carried out, said further drier consisting of a second turbo-drier (T') comprising a cylindrical tubular body (1') closed at its opposite ends by end plates (2', 3'), equipped with a heating jacket (4'), with at least one inlet opening (5') and at least one outlet opening (6') and with a bladed rotor (7') rotatably supported thereinside, and wherein the stream of cheese powder exiting said first turbo-drier (T) and fed into said second turbo-drier (T') is subject to the mechanical action of said bladed rotor (7') rotated at a speed of at least 200 rpm, with a consequent centrifugation of the cheese particles against said heated wall (9'), which brings about a further dehydration of said particles and conveyance of the same towards said at least one outlet opening (6').

4. A process according to any one of claims 1 to 3, wherein said starting cheese, optionally with at least one food additive added thereto, is fed through said at least one opening (5) of said first turbo-drier (T) in a pasty or melted state, at a temperature of 30-100°C.

5. A process according to any one of claims 1 to 4, wherein said bladed rotor (7, 7') rotates at a speed comprised between 200 and 1500 rpm.

6. A process according to any one of claims 1 to 5, wherein the flow rate of the stream of cheese entering into the first turbo-drier (T) is comprised between 150 and 400 kg/h, when said first turbo-drier has a diameter of 600 mm.

7. A process according to any one of claims 1 to 6, wherein the temperature of the inner wall of the first turbo-drier is kept at about 110-160°C, preferably about 120°C, and the average residence time of the cheese in the first turbo-drier (T) is comprised between 30 seconds and 5 minutes.

8. A process according to any one of claims 1 to 7, comprising the further step of feeding into said first turbo-drier (T), in co-current with said stream of cheese and through said at least one inlet opening (5), a continuous stream of an inert gas, preferably air or nitrogen, heated at a temperature of about 80-180°C.

9. A process according to claim 3 or according to any one of claims 4 to 8, when they depend on claim 3, comprising the further step of feeding into said second turbo-drier (T'), in co-current with said stream of cheese powder and through said at least one inlet opening (5'), a continuous stream of an inert gas, preferably air or nitrogen, heated at a temperature of about 80-180°C.

10. A process according to any one of claims 1 to 9, comprising the further step of feeding the stream of cheese exiting said first turbo-drier or optionally said further drier to a cooling apparatus, preferably a screw conveyor or a cool air pneumatic conveyor or a vibrator.

## Patentansprüche

1. Ein Verfahren zur Herstellung von wenigstens teilweise getrocknetem Käsepulver aus Käse mit einem Wasseranteil von 22 Gew.% bis 60 Gew.% und optional mit mindestens einem Lebensmittelzusatzstoff, mit den folgenden Schritten:
a) Zur Verfügung Stellen eines ersten Turbotrockners (T) aufweisend einen zylindrischen, röhrenförmigen Körper (1), der an seinen gegenüberliegenden Enden mit Endplatten (2,3) geschlossen ist und ausgestattet ist mit einem Heizmantel (4), mit wenigstens einer Einlassöffnung (5) und wenigstens einer Auslassöffnung (6) und mit einem darin drehbar gelagerten, mehrblättrigen Rotor (7) und optional einem weiteren Trockner,
b) Einspeisen durch genannte wenigstens eine Einlassöffnung (5) eines konstanten Stroms von Käse mit einem Wasseranteil zwischen 22 Gew.% und 60 Gew.% in den genannten ersten Turbotrockner (T), dessen Innenwand (9) eine Temperatur zwischen 90°C und 160°C aufweist,
c) Aussetzen des genannten Käsestroms der mechanischen Einwirkung durch den genannten mehrblättrigen Rotor (7), der mit einer Geschwindigkeit von wenigstens 200 Upm rotiert, was zur Aufspaltung des Käses in feine Partikel und Zentrifugieren dieser Partikel gegen die geheizte Innenwand (9) führt, mit der Folge einer Dehydrierung der genannten Partikel und Fördern der genannten Partikel zu der genannten wenigstens einen Auslassöffnung (6),
d) optionales Einspeisen des Stroms aus Käsepulver, der den genannten ersten Turbotrockner (T) verlässt, in den genannten optionalen weiteren Trockner,
e) kontinuierliches Ausbringen des Stroms aus Käsepulver aus dem genannten ersten Turbotrockner (T) oder dem genannten optionalen weiteren Trockner, wobei der Strom aus Käsepulver nur noch einen Wasseranteil von weniger oder gleich 20 Gew.%, vorzugsweise zwischen 15 Gew.% und 20 Gew.%, aufweist.

2. Ein Verfahren gemäß Anspruch 1, wobei wenigstens ein Lebensmittelzusatzstoff zugesetzt ist, der ausgewählt ist aus der Gruppe umfassend Kasein, Milchsäure und weitere Zusätze und Verarbeitungshilfsstoffe, die in der Milchindustrie gebräuchlich sind.

3. Ein Verfahren gemäß Anspruch 1 oder 2, wobei der Schritt d) durchgeführt wird, wobei der genannte optionale weitere Trockner ein zweiter Turbotrockner (T') aufweisend einen zylindrischen, rohrförmigen Körper (1') ist, der an seinen gegenüberliegenden Enden mit Endplatten (2',3') geschlossen ist und ausgestattet ist mit einem Heizmantel (4'), mit wenigstens einer Einlassöffnung (5') und mit wenigstens einer Auslassöffnung (6') und einem darin drehbar gelagerten, mehrblättrigen Rotor (7'), und wobei der Strom aus Käsepulver, der den genannten ersten Turbotrockner (T) verlässt und in den zweiten Turbotrockner (T) eingespeist wird, der mechanischen Einwirkung, hervorgerufen durch den genannten mehrblättrigen Rotor (7'), der mit einer Geschwindigkeit von wenigstens 200 Upm rotiert, ausgesetzt wird, wodurch die Käsepartikel gegen die genannte geheizte Innenwand (9') zentrifugiert werden, was eine weitere Dehydrierung der genannten Käsepartikel und Fördern der genannten Käsepartikel zu der genannten, wenigstens einen Auslassöffnung (6') bewirkt.

4. Ein Verfahren gemäß einem der Ansprüche 1 bis 3, wobei der Ausgangskäse, der optional mit wenigstens einem Lebensmittelzusatzstoff versetzt ist, durch die wenigstens eine Einlassöffnung (5) des genannten ersten Turbotrockners (T) in einem pastösen oder geschmolzenen Zustand bei Temperaturen zwischen 30-100°C gefördert wird.

5. Ein Verfahren gemäß einem der Ansprüche 1 bis 4, wobei der genannte mehrblättrige Rotor (7,7') mit einer Geschwindigkeit zwischen 200-1500 Upm rotiert.

6. Ein Verfahren gemäß einem der Ansprüche 1 bis 5, wobei die Durchflussrate des Käsestroms, welcher den ersten Turbotrockner (T) erreicht, zwischen 150 und 400 kg/h beträgt, wenn genannter erster Turbotrockner (T) einen Durchmesser von 600 mm aufweist.

7. Ein Verfahren gemäß einem der Ansprüche 1 bis 6, wobei die Temperatur der Innenwand des ersten Turbotrockners (T) zwischen 110-160°C, vorzugsweise etwa 120°C, beträgt, und die mittlere Verweildauer des Käses im ersten Turbotrockner (T) zwischen 30 Sekunden und 5 Minuten beträgt.

8. Ein Verfahren gemäß einem der Ansprüche 1 bis 7, aufweisend den weiteren Schritt, dass zusätzlich zu dem in den ersten Turbotrockner (T) durch die genannte, wenigstens eine Einlassöffnung (5) eingespeisten Käsestrom ein konstanter Zusatzstrom aus Inertgas, vorzugsweise Luft oder Stickstoff, beheizt auf eine Temperatur zwischen 80-180°C, eingeleitet wird.

9. Ein Verfahren gemäß Anspruch 3 oder gemäß einem der Ansprüche 4 bis 8, aufweisend den weiteren Schritt, dass zusätzlich zu dem, in den zweiten Turbotrockner (T') durch die genannte, wenigstens eine Einlassöffnung (5') eingespeisten Käsestrom ein konstanter Zusatzstrom aus Inertgas, vorzugsweise Luft- oder Stickstoff, beheizt auf eine Temperatur zwischen 80-180°C, eingeleitet wird.

10. Ein Verfahren gemäß einem der Ansprüche 1 bis 9, aufweisend den weiteren Schritt, dass der Käsestrom, welcher den ersten Turbotrockner oder einen optionalen weiteren Turbotrockner verlässt, in eine Kühleinrichtung, vorzugsweise einen Schneckenförderer oder einen Kaltluft-Druckluft-Förderer oder einen Rüttler, eingespeist wird.

## Revendications

1. Procédé pour la production de poudre de fromage au moins partiellement séché à partir de fromage ayant une teneur en eau comprise entre 22 et 60 % en poids et ayant de façon facultative au moins un additif alimentaire, comprenant les étapes consistant à :
a) mettre à disposition un premier turbo-sécheur (T) comprenant un corps tubulaire cylindrique (1) fermé à ses extrémités opposées par des plaques d'extrémité (2, 3), équipé d'une enveloppe chauffante (4), ayant au moins une ouverture d'entrée (5) et au moins une ouverture de sortie (6) et avec un rotor à pales (7) supporté de façon rotative à l'intérieur de celui-ci, et de façon facultative d'un sécheur supplémentaire ;
b) introduire un flux continu de fromage ayant une teneur en humidité comprise entre 22 et 60 % en poids dans ledit turbo-sécheur (T) par la au moins une ouverture d'entrée (5), la paroi intérieure (9) dudit turbo-sécheur ayant une température comprise entre 90 °C et 160 °C,
c) soumettre ledit flux de fromage à l'action mécanique dudit rotor à pales (7) tournant à une vitesse d'au moins 200 tours par minutes, avec une séparation consécutive du fromage en fines particules et centrifugation desdites particules contre ladite paroi chauffée (9), ce qui entraîne une déshydratation desdites particules et le transfert de celles-ci en direction de ladite au moins une ouverture de sortie (6),
d) alimenter de façon facultative le flux de poudre de fromage sortant du premier turbo-sécheur (T) dans ledit sécheur supplémentaire,
e) décharger de façon continue dudit premier turbo-sécheur (T), ou de façon facultative dudit sécheur supplémentaire, un flux de poudre de fromage ayant une teneur en humidité inférieure ou égale à 20 %, de préférence comprise entre 15 et 20 %.

2. Procédé selon la revendication 1, dans lequel le au moins un additif alimentaire est choisi dans le groupe comprenant la caséine, l'acide lactique et d'autres additifs et auxiliaires technologiques communément utilisés dans l'industrie laitière.

3. Procédé selon la revendication 1 ou 2, dans lequel ladite étape d) est réalisée, ledit sécheur supplémentaire étant constitué par un second turbo-sécheur (T') comprenant un corps tubulaire cylindrique (1') fermé à ses extrémités opposées par des plaques d'extrémité (2', 3'), équipé d'une enveloppe chauffante (4'), ayant au moins une ouverture d'entrée (5') et au moins une ouverture de sortie (6') et avec un rotor à pales (7') supporté de façon rotative à l'intérieur de celui-ci, et dans lequel le flux de poudre de fromage sortant dudit premier turbo-sécheur (T) et introduit dans ledit second turbo-sécheur (T') est soumis à l'action mécanique dudit rotor à pales (7') tournant à une vitesse d'au moins 200 tours par minutes, avec une centrifugation consécutive des particules de fromage contre ladite paroi chauffée (9'), ce qui entraîne une déshydratation supplémentaire desdites particules et le transfert de celles-ci en direction de ladite au moins une ouverture de sortie (6').

4. Procédé selon l'une des revendications 1 à 3, dans lequel ledit fromage de départ, de façon facultative avec le au moins un additif alimentaire ajouté dedans, est introduit à travers ladite au moins une ouverture (5) dudit premier turbo-sécheur (T) à l'état pâteux ou fondu, à une température comprise entre 30 et 100 °C.

5. Procédé selon l'une des revendications 1 à 4, dans lequel ledit rotor à pâle (7, 7') tourne à une vitesse comprise entre 200 et 1 500 tours par minute.

6. Procédé selon l'une des revendications 1 à 5, dans lequel la vitesse du flux de fromage entrant dans le premier turbo-sécheur (T) est comprise entre 150 et 400 kg/h, lorsque ledit turbo-sécheur a un diamètre de 600 mm.

7. Procédé selon l'une des revendications 1 à 6, dans lequel la température de la paroi intérieure du premier turbo-sécheur est amenée à environ 110 à 160 °C, de préférence à environ 120 °C, et la durée moyenne de séjour du fromage dans le premier turbo-sécheur (T) est comprise entre 30 secondes et 5 minutes.

8. Procédé selon l'une des revendications 1 à 7, comprenant l'étape supplémentaire consistant à introduire dans ledit premier turbo-sécheur (T), concomitamment audit flux de fromage et à travers ladite au moins une ouverture d'entrée (5), un courant continu de gaz inerte, de préférence de l'air ou de l'azote, chauffé à une température d'environ 80 à 180 °C.

9. Procédé selon la revendication 3 ou selon l'une des revendications 4 à 8 lorsqu'elles dépendent de la revendication 3, comprenant l'étape supplémentaire consistant à introduire dans ledit second turbo-sécheur (T'), concomitamment audit flux de poudre de fromage et à travers ladite au moins une ouverture d'entrée (5'), un courant continu de gaz inerte, de préférence de l'air ou de l'azote, chauffé à une température d'environ 80 à 180 °C.

10. Procédé selon l'une des revendications 1 à 9, comprenant l'étape supplémentaire consistant à amener le courant de fromage sortant dudit premier turbo-sécheur, ou de façon facultative dudit sécheur supplémentaire, à un appareil de refroidissement, de préférence un convoyeur à vis ou un convoyeur pneumatique à air froid ou un vibrateur.
